**Europäisches Patentamt**

**European Patent Office**

**Office européen des brevets**

(19)

(11) Veröffentlichungsnummer : **0 473 117 B1**

(12)

# EUROPÄISCHE PATENTSCHRIFT

(45) Veröffentlichungstag der Patentschrift :
**06.09.95 Patentblatt 95/36**

(51) Int. Cl.$^6$ : **G02B 13/06**

(21) Anmeldenummer : **91114369.1**

(22) Anmeldetag : **27.08.91**

(54) **Hochgeöffnetes Weitwinkelobjektiv.**

(30) Priorität : **29.08.90 DE 4027273**

(43) Veröffentlichungstag der Anmeldung :
**04.03.92 Patentblatt 92/10**

(45) Bekanntmachung des Hinweises auf die
Patenterteilung :
**06.09.95 Patentblatt 95/36**

(84) Benannte Vertragsstaaten :
**DE FR GB IT**

(56) Entgegenhaltungen :
**DE-A- 2 334 056**
**DE-A- 2 718 521**
**DE-A- 3 119 993**
**US-A- 3 737 214**

(73) Patentinhaber : **Jos. Schneider Optische**
**Werke Kreuznach GmbH & Co. KG**
**Ringstrasse 132**
**D-55543 Bad Kreuznach (DE)**

(72) Erfinder : **Schauss, Udo**
**Zum Heimberg 7**
**W-6558 Waldböckelheim (DE)**

(74) Vertreter : **Beckensträter, Margarethe**
**Rechtsanwältin**
**Falkensteiner Strasse 23**
**D-60322 Frankfurt am Main (DE)**

## Beschreibung

Die Erfindung betrifft ein hochgeöffnets Weitwinkelobjektiv bestehend aus einer ersten zerstreuenden Linsengruppe mit wesentlicher Wirkung auf die Korrektion der Verzeichnung und der relativen Beleuchtungsstärke, einem Luftabstand, einer etwa in der Mitte dieses Luftabstandes befindlichen Aperturblende mit für die Korrektion wesentlicher Vignettierungswirkung im Bildfeld und einer darauf folgenden sammelnden Linsengruppe, welche aus einem Kittglied und einer sammelnden Linsengruppe mit Wirkung auf die sphärische Aberration und die Bildfeldwölbung besteht.

Klassische Weitwinkelkonstruktionen mit hoher Öffnung weisen typischerweise deutlich mehr als sechs Linsen auf, wobei durch Einsatz von negativer Brechkraft im Frontteil einerseits die Schnittweite relativ zur Brennweite groß gehalten wird und andererseits die relative Beleuchtungsstärke durch bewußt eingeführte Pupillenaberration mit wachsendem Bildwinkel angehoben wird. Der charakteristische Aufbau des Frontgliedes ist, wie der Fachmann weiß, bedingt durch einen Kompromiß hinsichtlich der Korrektion von Verzeichnung und Einführung von Pupillenaberrationen. Bei Beschränkung auf sphärische Flächen bei der Konstruktion von hochgeöffneten Objektiven mit großem Bildwinkel kann eine akzeptable Abbildungsqualität und Verzeichnung nur mit hoher Linsenzahl erreicht werden. Durch Einsatz asphärischer Flächen kann die Linsenzahl durch die damit verbundenen Korrektionsfreiheitsgrade verringert werden.

In der DE-OS 25 47 713 werden 5-linsige Konstruktionen mit einem maximalen Bildwinkel von 85 Grad beschrieben. In der DE-OS 36 00 573 sind 3- bis 7-linsige Weitwinkelsysteme für Endoskope beschrieben; die darin angegebenen 6- und 7-linsigen Weitwinkelsysteme erreichen maximal einen Bildwinkel von 120 Grad. Die in der DE-OS 31 19 993 Al vorgeschlagenen fünflinsigen Objektive haben zwar einen Bildwinkel von mehr als 120 Grad, erreichen aber im Gegensatz zu der vorliegenden Erfindung nur eine relative Anfangsöffnung von maximal 1 : 4.0, bei einer nicht korrigierten Verzeichnung. Die in der DE-OS 23 34 056 beschriebenen Objektive wiederum sind zwar sehr lichtstark, erreichen jedoch nur einen maximalen Bildwinkel von ca 84 Grad.

Der Erfindung liegt daher die Aufgabe zugrunde, ein lichtstarkes, extrem weitwinkliges Objektiv mit reduzierter Verzeichnung zu schaffen, das einen möglichst kleinen Objektivdurchmesser und minimale Linsenanzahl aufweist, insbesondere für CCD-Kameras z. B. zum Zwecke der Überwachung und Beobachtung.

Erfindungsgemäß wird die Aufgabe durch die merkmale des Anspruchs 1 gelöst. Vorteilhafte Weiterbildungen und das führungsbeispiele ergeben sich ferner aus den Unteransprüchen. Vorzugsweise kann der Abstand zwischen der ersten zerstreuenden Wirkungsgruppe und der bildseitig auf die Aperturblende folgenden sammelnden Wirkungsgruppe mindestens das Dreifache der Gesamtbrennweite betragen.

Der Luftabstand zwischen der ersten zerstreuenden Wirkungsgruppe und der positiven bildseitigen Wirkungsgruppe kann vorzugsweise in einer Ausführungsform etwa dem 0,3-fachen bis 0,7-fachen der Gesamtbaulänge des Weitwinkelobjektivs, in einer anderen Ausführungsform aber auch etwa dem 0,25-fachen bis 0,45-fachen der Gesamtbaulänge des Weitwinkelobjektivs entsprechen.

Vorteilhaft wird ein auf die Aperturblende folgendes Kittglied mit gesamthaft positiver Brechkraft verwendet, das korrigierende Wirkung auf Farbfehler und Petzvalsumme hat.

Das Kittglied kannzweckmäßig aus einer objektseitigen Positivlinse und einer bildseitigen Negativlinse bestehen.

Eine auf dieses Kittglied folgende Positivlinse kann vorteilhaft eine weitere asphärische Fläche aufweisen.

Mit dem beschriebenen konstruktiven Aufbau wird vorzugsweise bei einer Ausführungsform ein typischer Bildfeldwinkel von wenigstens etwa 130° bei einer Blendenzahl von etwa 2,0, bei einer anderen Ausführungsform ein typischer Bildfeldwinkel von wenigstens etwa 146° bei einer Blendenzahl von etwa 2,0 erreicht.

Die relative Beleuchtungsstärke kann durch konstruktive Beeinflussung der Pupillenaberration und Einführung einer dimensionierten Verzeichnung mindestens so groß wie bei einem Objektiv mit natürlichem Helligkeitsabfall (cos**4) sein. Vorzugsweise ist die relative Beleuchtungsstärke gegenüber dem natürlichen Helligkeitsabfall durch konstruktive Beeinflussung der Pupillenaberration und Einführung einer dimensionierten Verzeichnung aber deutlich angehoben.

Durch die Erfindung wird ein hochgeöffnetes Weitwinkelobjektiv mit minimaler Linsenanzahl, vorzugsweise mit einer vierlinsigen oder sechslinsigen Konstruktion geschaffen, mit extrem großem Bildwinkel und überraschend guter Bildqualität.

Die Brechkraftverteilung ist so gewählt, daß die bildseitige Schnittweite deutlich größer als die Gesamtbrennweite des Systems ist. Das Weitwinkelsystem besteht daher aus einer objektseitigen Wirkungsgruppe mit stark negativer Brechkraft und einer durch großen Luftabstand getrennten bildseitigen Wirkungsgruppe mit stark positiver Brechkraft bei einem Objektivaufbau mit etwa gleichen freien Durchmessern bei der objektseitigen und der bildseitigen Wirkungsgruppe mit einem daraus resultierenden minimalen Gesamtdurchmesser des Objektivs.

Die relative Beleuchtungsstärke im Bildfeld wurde sowohl durch Aufweitung der Eintrittspupille als auch durch gezielte Dimensionierung der Verzeichnung gesteigert.

Zur Erhöhung der Korrektionsfreiheitsgrade bei minimaler Linsenanzahl sind sowohl in der objektseitigen Wirkungsgruppe als auch in der bildseitigen Wirkungsgruppe je mindestens eine asphärische Fläche eingeführt worden.

Die brechende Wirkung der objektseitigen Wirkungsgruppe ist durch Formgebung der eingesetzten asphärischen Fläche so gestaltet, daß die brechende Wirkung dieser Wirkungsgruppe ausgehend von der optischen Achse zum Rand hin abnehmend ist.

Zur Gewährleistung einer guten Bildqualität ist die bildseitige Wirkungsgruppe entweder mindestens dreilinsig und mit mindestens einer asphärischen Fläche oder mindestens vierlinsig und mit mindestens einer asphärischen Fläche ausgebildet.

Durch Festlegung der ersten beiden Linsen in der bildseitigen Wirkungsgruppe als Kittglied und Einführung von mindestens einer asphärischen Fläche bei der letzten, einzeln stehenden Positivlinse, können die Strahlenbündel so geführt werden, daß ein minimaler Objektivdurchmesser und optimale Korrektion erreicht werden.

Die etwa in der Mitte des zwischen der objektseitigen Wirkungsgruppe und der bildseitigen Wirkungsgruppe befindlichen Luftabstandes angeordnete Aperturblende begrenzt die Bündelquerschnitte bis zum etwa 0,8-fachen der maximalen Bildgröße und bewirkt eine Verbesserung der Bildqualität sowie gegebenenfalls auch der relativen Beleuchtungsstärke.

Das erfindungsgemäße hochgeöffnete Weitwinkelobjektiv ist insbesondere als Aufnahmeobjektiv für elektronische Bildverarbeitungssysteme wie CCD-Kameras geeignet.

Weitere Merkmale, Einzelheiten und Vorteile der Erfindung ergeben sich aus der nachfolgenden Beschreibung bevorzugter Ausführungsbeispiele anhand der anhängenden Zeichnung.

Es zeigen:

Fig. 1    einen Linsenschnitt eines ersten Ausführungsbeispiels eines hochgeöffneten Weitwinkelobjektivs gemäß der Erfindung,

Fig. 2    ein verzeichnungsbehaftetes Bild eines rechteckigen Objektgitters des ersten Ausführungsbeispiels eines hochgeöffneten Weitwinkelobjektivs gemäß der Erfindung,

Fig. 3    die relative Beleuchtungsstärke als Funktion des Bildwinkels des ersten Ausführungsbeispiels eines hochgeöffneten Weitwinkelobjektivs gemäß der Erfindung,

Fig. 4    die effektive Bildfeldwölbung für die sagittale und meridionale Bildfeldschale in Abhängigkeit vom Bildwinkel des ersten Ausführungsbeispiels eines hochgeöffneten Weitwinkelobjektivs gemäß der Erfindung,

Fig. 5    einen Linsenschnitt eines zweiten Ausführungsbeispiels eines hochgeöffneten Weitwinkelobjektivs gemäß der Erfindung,

Fig. 6    ein verzeichnungsbehaftetes Bild eines rechteckigen Objektgitters des zweiten Ausführungsbeispiels eines hochgeöffneten Weitwinkelobjektivs gemäß der Erfindung,

Fig. 7    die relative Beleuchtungsstärke als Funktion des Bildwinkels des zweiten Ausführungsbeispiels eines hochgeöffneten Weitwinkelobjektivs gemäß der Erfindung,

Fig. 8    die effektive Bildfeldwölbung für die sagittale und meridionale Bildfeldschale in Abhängigkeit vom Bildwinkel des zweiten Ausführungsbeispiels eines hochgeöffneten Weitwinkelobjektivs gemäß der Erfindung,

Fig. 9    einen Linsenschnitt eines dritten Ausführungsbeispiels eines hochgeöffneten Weitwinkelobjektivs gemäß der Erfindung,

Fig. 10   ein verzeichnungsbehaftetes Bild eines rechteckigen Objektgitters des dritten Ausführungsbeispiels eines hochgeöffneten Weitwinkelobjektivs gemäß der Erfindung,

Fig. 11   die relative Beleuchtungsstärke als Funktion des Bildwinkels des dritten Ausführungsbeispiels eines hochgeöffneten Weitwinkelobjektivs gemäß der Erfindung,

Fig. 12   die effektive Bildfeldwölbung für die sagittale und meridionale Bildfeldschale in Abhängigkeit vom Bildwinkel des dritten Ausführungsbeispiels eines hochgeöffneten Weitwinkelobjektivs gemäß der Erfindung.

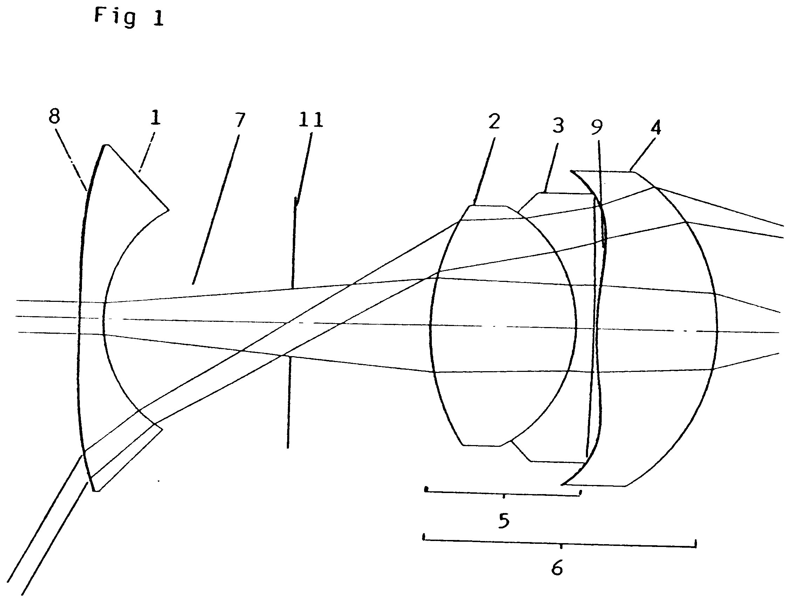

Ein bevorzugtes Ausführungsbeispiel der Erfindung ist in Fig. 1 dargestellt. Danach besteht das hochgeöffnete Weitwinkelobjektiv aus zwei Wirkungsgruppen, die durch einen relativ großen Luftabstand getrennt sind. Mit 1 ist die erste zerstreuende Linsengruppe bezeichnet, die objektseitig eine asphärische Fläche 8 aufweist. Mit 7 ist der Luftabstand zwischen der ersten Linsengruppe 1 und der zweiten Linsengruppe 6 bezeichnet. Die Aperturblende 11 ist etwa in der Mitte des Abstandes zwischen der ersten zerstreuenden Linsengruppe 1 und der positiven Linsengruppe 6 angeordnet. Die bildseitige positive Linsengruppe 6 besteht aus einem Kittglied 5, das aus einer objektseitigen Positivlinse 2 und einer bildseitigen Negativlinse 3 besteht, wobei das Kittglied 5 gesamthaft positive Brechkraft und korrigierende Wirkung auf Farbfehler und Petzvalkrümmung aufweist, und einer Linsenuntergruppe 4 mit Wirkung auf die sphärische Aberration und die Bildfeldwölbung, deren eine Fläche 9 asphärisch ist. Das Kittglied 5 und die Linsenuntergruppe 4 sind durch einen kleinen Luftabstand voneinander getrennt. Die negativ brechende Wirkung der ersten zerstreuenden Linsengruppe 1 ist durch die asphärische Fläche 8 ausgehend von der optischen Achse zum Rand hin kontinuierlich vermindert, während die positiv brechende Wirkung der Linsenuntergruppe 4 durch die asphärische Fläche 9 ausgehend von der optischen Achse zum Rand hin kontinuierlich vermindert ist.

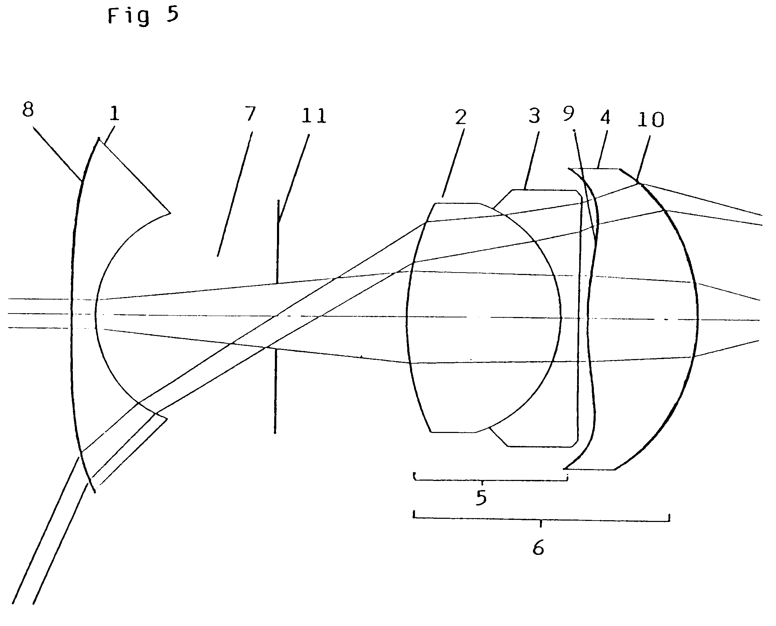

Das weitere in Fig. 5 gezeigte Ausführungsbeispiel der Erfindung unterscheidet sich von dem in Fig. 1 dargestellten ersten Ausführungsbeispiel nur dadurch, daß die linsenuntergruppe 4 auch bildseitig eine asphärische Fläche 10 aufweist und daß der - ebenfalls kleine - Luftabstand zwischen dem Kittglied 5 und der Linsenuntergruppe 4 etwas größer ist als im Falle des Ausführungsbeispiels der Fig 1. Im Übrigen bezeichnen in Fig. 5 gleiche Bezugsziffern gleiche Teile wie in Fig. 1.

Durch die negative Brechkraft der objektseitigen Linsengruppe 1 und die positive Brechkraft der bildseitigen Linsengruppe 6 wird im Zusammenhang mit dem dazwischen befindlichen großen Luftabstand 7 die für Retrofokussysteme typische, im Vergleich zur Brennweite lange Schnittweite erzielt. Der maximale freie Durchmesser der eingesetzten Linsen ist ungefähr fünfmal so groß wie die Gesamtbrennweite. Etwa in der Mitte des auf die objektseitige Wirkungsgruppe 1 folgenden Luftabstandes 7 ist eine Aperturblende 11 angeordnet. Die objektseitige Wirkungsgruppe 1 mit negativer Brechkraft wird vorteilhafterweise als asphärische Linse ausgebildet. Durch den Einfluß der asphärischen Fläche 8 vermindert sich die brechende Wirkung dieser Linse ausgehend von der optischen Achse zum Rande hin.

Bei der bildseitigen Wirkungsgruppe 6 ist es vorteilhaft, diese mindestens dreilinsig mit mindestens einer asphärischen Fläche 9 aufzubauen. Die dreilinsige, bildseitige Wirkungsgruppe 6 enthält vorzugsweise objektseitig ein aus Positiv- 2 und Negativlinse 3 bestehendes Kittglied 5 und eine durch einen kleinen Luftabstand getrennte, darauf folgende als Positivlinse ausgebildete Linsenuntergruppe 4.

Mindestens die erste 9 oder zweite 10 (Fig. 5) Fläche dieser Positivlinse 4 ist zur Erzielung einer guten Korrektion bei extrem kleiner Gesamtlinsenzahl über den sehr großen Bildfeldwinkel hinweg als asphärische Fläche ausgebildet. Eine besonders gute Korrektion wird erreicht, wenn, wie im Ausführungsbeispiel der Fig. 5 gezeigt, beide Flächen 9, 10 dieser Positivlinse 4 asphärisch sind, wobei sich bei jeder Formgebung die positiv brechende Wirkung dieser Linse ausgehend von der optischen Achse zum Rand hin kontinuierlich vermindert.

Durch die asphärische Fläche 8 in der objektseitigen Linsengruppe 1 lassensich im wesentlichen die Verzeichnung und die Pupillenaberration auf vorteilhafte Werte korrigieren.

Die Einführung von einer oder zwei asphärischen Flächen in der bildseitigen Wirkungsgruppe ist besonders zur Korrektion des Öffnungsfehlers und der Ebnung des Bildfeldes geeignet.

Mit einer bevorzugten vierlinsigen Ausführungsform wird ein Bildwinkel von 132°, also von mehr als 130°, bei einer Blendenzahl von 2,0 erzielt, wobei sowohl die monochromatischen als auch die Farbfehler bei minimaler Anzahl von Linsen weitgehend korrigiert wurden.

Bei den beschriebenen Ausführungsbeispielen ist die relative Beleuchtungsstärke durch konstruktive Beeinflussung der Pupillenaberration und Einführung einer dimensionierten Verzeichnung mindestens doppelt so groß wie bei einem Objektiv mit natürlichem Helligkeitsabfall (cos**4).

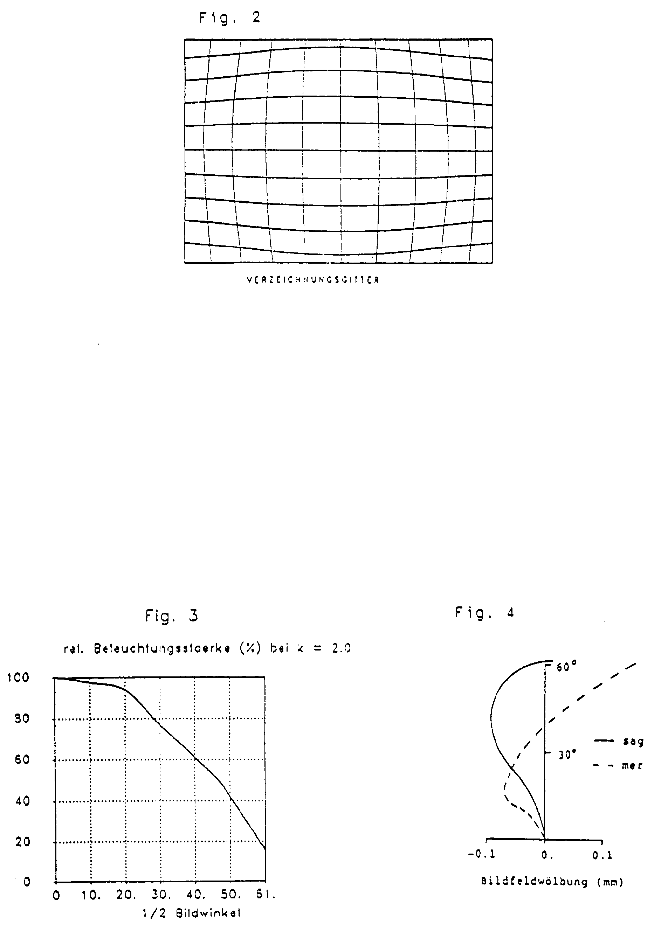

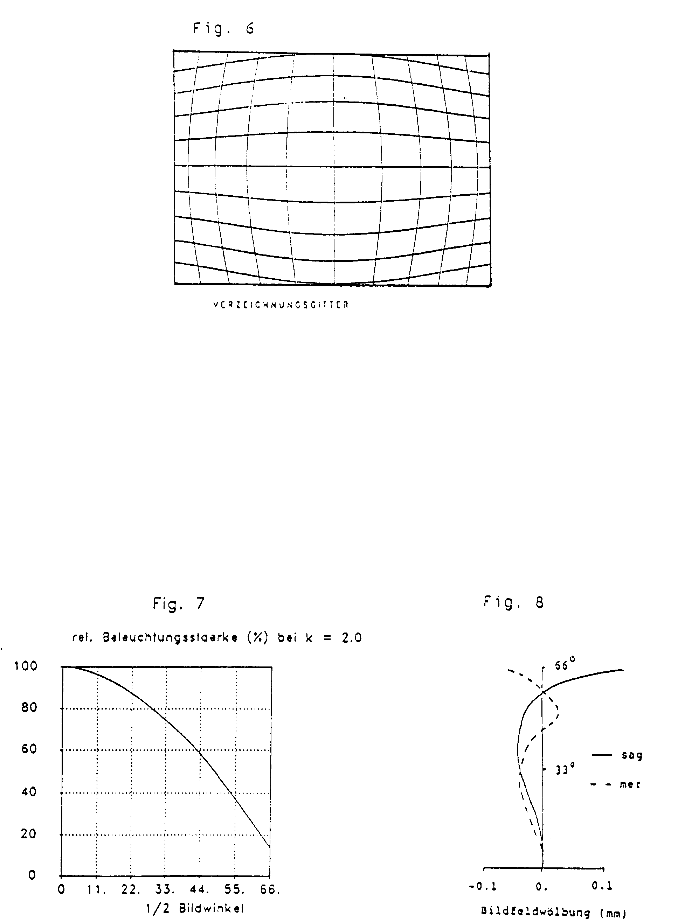

Die Fig. 2, 3 und 4 beziehen sich, wie bereits erwähnt, auf das Ausführungsbeispiel der Fig. 1, und die Fig. 6, 7 und 8 beziehen sich, wie ebenfalls bereits erwähnt, auf das Ausführungsbeispiel der Fig. 5.

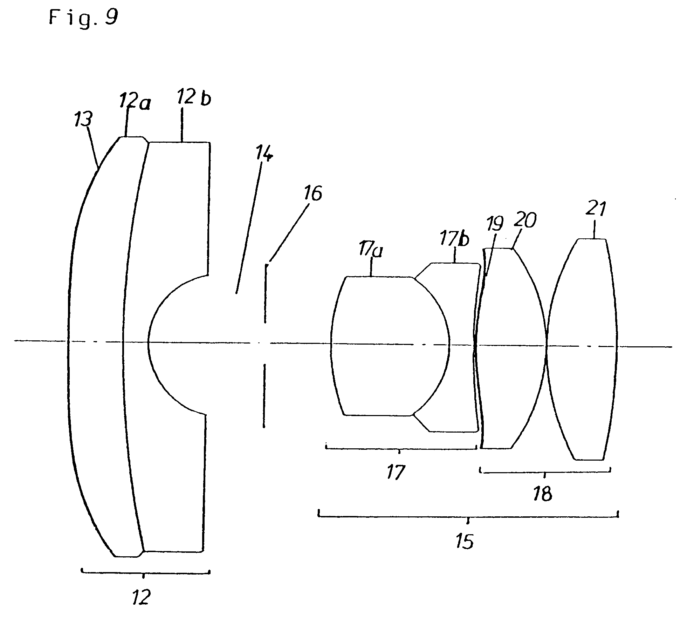

Ein drittes, gegenüber dem ersten der Fig. 1 und zweiten der Fig. 5 noch weiter verbessertes und daher besonders bevorzugtes Ausführungsbeispiel der Erfindung ist in Fig. 9 dargestellt. Danach besteht das hochgeöffnete Weitwinkelobjektiv aus zwei Wirkungsgruppen, die durch einen relativ großen Luftabstand getrennt sind. Mit 12 ist die erste zerstreuende Linsengruppe bezeichnet, die aus einem sammelnden Meniskus 12a und einem zerstreuenden Meniskus 12b, die miteinander verkittet sind, besteht und die objektseitig eine asphärische Fläche 13 aufweist. Mit 14 ist der Luftabstand zwischen der ersten Linsengruppe 12 und der zweiten Linsengruppe 15 bezeichnet. Die Aperturblende 16 ist etwa in der Mitte des Abstandes zwischen der ersten zerstreuenden Linsengruppe 12 und der positiven Linsengruppe 15 angeordnet. Die bildseitige positive Linsengruppe 15 besteht aus einem Kittglied 17, das aus einer objektseitigen Positivlinse 17a und einer bildseitigen Negativlinse 17b besteht, wobei das Kittglied 17 gesamthaft positive Brechkraft und korrigierende Wirkung auf Farbfehler und Petzvalkrümmung aufweist, und einer sammelnden Linsenuntergruppe 18 mit Wirkung auf die sphärische Aberration und die Bildfeldwölbung, deren eine Fläche 19 asphärisch ist. Das Kittglied 17 und die sammelnde Linsenuntergruppe 18 sind durch einen kleinen Luftabstand voneinander getrennt. Die negativ brechende Wirkung der ersten zerstreuenden Linsengruppe 12 ist durch die asphärische Fläche 13 ausgehend von der optischen Achse zum Rand hin kontinuierlich vermindert, während die positiv brechende Wirkung der sammelnden Linsenuntergruppe 18 bestehend aus den bikonvexen Linsen 20 und 21 durch die asphärische Fläche 19 ausgehend von der optischen Achse zum Rand hin kontinuierlich vermindert ist.

Durch die negative Brechkraft der objektseitigen Linsengruppe 12 und die positive Brechkraft der bildseitigen Linsengruppe 15 wird im Zusammenhang mit dem dazwischen befindlichen großen Luftabstand 14 die für Retrofokussysteme typische, im Vergleich zur Brennweite lange Schnittweite erzielt. Etwa in der Mitte des auf die objektseitige Linsengruppe 12 folgenden Luftabstandes 14 ist eine Aperturblende 16 angeordnet. Die objektseitige Linsengruppe 12 mit negativer Brechkraft enthält vorteilhafterweise eine asphärische Fläche 13. Durch den Einfluß der asphärischen Fläche 13 vermindert sich die brechende Wirkung der objektseitigen Linsengruppe 12 ausgehend von der optischen Achse zum Rand hin.

Bei der bildseitigen Linsengruppe 15 ist es vorteilhaft, diese mindestens vierlinsig mit mindestens einer asphärischen Fläche 19 auszubauen. Die vierlinsige, bildseitige Linsengruppe 15 enthält vorzugsweise objektseitig ein aus Positivlinse 17a und Negativlinse 17b bestehendes Kittglied 17 und eine durch einen kleinen Luftabstand getrennte, aus zwei Positivlinsen 20, 21 bestehende Linsenuntergruppe 18.

Mindestens eine Linsenfläche der Linsenuntergruppe 18, z.B. die Fläche 19, ist zur Erzielung einer guten Korrektion bei extrem kleiner Gesamtlinsenzahl über den sehr großen Bildfeldwinkel hinweg als asphärische Fläche ausgebildet. Die Form der asphärischen Fläche 19 bewirkt, daß die positiv brechende Wirkung der Linsenuntergruppe 18 ausgehend von der optischen Achse zum Rand hin kontinuierlich abnimmt.

Durch die asphärische Fläche 13 in der objektseitigen Linsengruppe 12 lassen sich im wesentlichen die Verzeichnung und die Pupillenaberration auf vorteilhafte Weise korrigieren.

Die Einführung von mindestens einer asphärischen Fläche in der bildseitigen Linsengruppe 15 ist besonders zur Korrektion des Öffnungsfehlers und der Ebnung des Bildfeldes geeignet.

Mit einer bevorzugten sechslinsigen Ausführungsform wird ein Bildwinkel von 148° bei einer Blendenzahl von 2.0 erzielt, wobei sowohl die monochromatischen als auch die Farbfehler bei minimaler Anzahl von Linsen weitgehend korrigiert wurden.

Bei dem beschriebenen Ausführungsbeispiel ist die relative Beleuchtungsstärke durch konstruktive Beeinflussung der Pupillenaberration und Einführung einer dimensionierten Verzeichnung deutlich größer, als bei einem Objektiv mit natürlichem Helligkeitsabfall (cos**4).

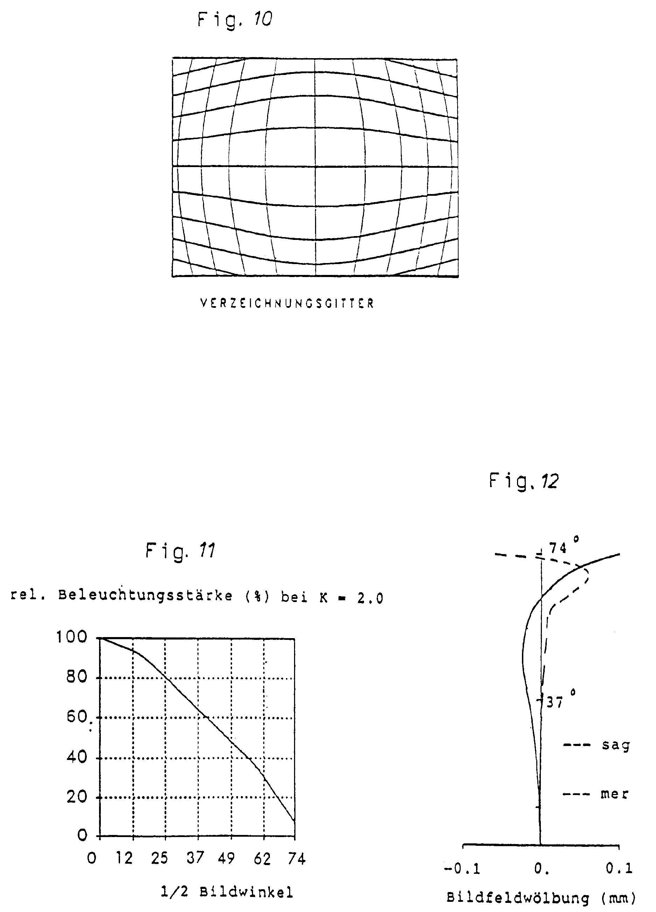

Die Fig. 10, 11 und 12 beziehen sich, wie bereits erwähnt, auf das Ausführungsbeispiel der Fig. 9.

Mit den drei Ausführungsbeispielen der Erfindung können mithin bei einer Blendenzahl von 2.0 Bildwinkel von etwa 125° bis etwa 150° erzielt werden, wobei unter Bildwinkel der beiderseits der optischen Achse gesamthaft auftretende Bildwinkel verstanden wird.

In den nachstehenden Tabellen I, II und III sind die numerischen Daten erfindungsgemäßer hochgeöffneter Weitwinkelobjektive aufgeführt:

## Tabelle I

$r\ 1 = 1470.82$ (asphärisch)

$d\ 1 = 1.21$ $\qquad nd1 = 1.7292 \qquad \nu\ 1 = 54.70$

$r\ 2 = 5.902$

$d\ 2 = 9.00$

$r\ 3 = \infty$

$d\ 3 = 6.56$

$r\ 4 = 10.15$

$d\ 4 = 7.00 \qquad nd2 = 1.6405 \qquad \nu\ 2 = 60.10$

$r\ 5 = -6.32$

$d\ 5 = 0.86 \qquad nd3 = 1.8467 \qquad \nu\ 3 = 23.83$

$r\ 6 = -111.958$

$d\ 6 = 0.10$

$r\ 7 = 14.87$ (asphärisch)

$d\ 7 = 5.79 \qquad nd4 = 1.7725 \qquad \nu\ 4 = 49.60$

$r\ 8 = -8.64$

$F = 2.997 \qquad\qquad 2\omega = 122$ Grad

Asphärenkoeffizienten der ersten Oberfläche

K    (Konuskonstante) = 0

D    $0.340428 \times 10^{-3}$

E    $-0.432607 \times 10^{-5}$

F       $0.576946 \times 10^{-7}$
G       $-0.356679 \times 10^{-9}$
        Asphärenkoeffizienten der siebten Oberfläche
K       (Konuskonstante) = 0
D       $-0.852530 \times 10^{-3}$
E       $-0.947159 \times 10^{-5}$
F       $0.151413 \times 10^{-6}$
G       $-0.139941 \times 10^{-3}$

## Tabelle II

r 1 = 381.611 (asphärisch)
                d 1 = 1.17      nd1 = 1.7292        $\nu$ 1 = 54.70
r 2 = 5.088
                d 2 = 8.64
r 3 = ∞
                d 3 = 6.19
r 4 = 12.53
                d 4 = 7.30       nd2 = 1.7725        $\nu$ 2 = 49.60
r 5 = -5.64
                d 5 = 0.86       nd3 = 1.8467        $\nu$ 3 = 23.83
r 6 = 279.392
                d 6 = 0.40
r 7 = 13.954 (asphärisch)
                d 7 = 5.27       nd4 = 1.7292        $\nu$ 4 = 54.70
r 8 = -8.48 (asphärisch)

F = 2.762                    $2\omega$ = 132 Grad

        Asphärenkoeffizienten der ersten fläche
K       (Konuskonstante) = 0
D       $0.315830 \times 10^{-3}$
E       $-0.192608 \times 10^{-5}$
F       $0.849578 \times 10^{-8}$
        Asphärenkoeffizienten der siebten fläche
K       (Konuskonstante) = 0
D       $-0.767120 \times 10^{-3}$
E       $0.458289 \times 10^{-5}$
F       $-0.359959 \times 10^{-6}$
G       $0.204217 \times 10^{-8}$
        Asphärenkoeffizienten der achten fläche
K       (Konuskonstante) = 0
D       $0.193377 \times 10^{-3}$
E       $-0.100577 \times 10^{-5}$
F       $-0.520482 \times 10^{-7}$

## Tabelle III

r 1 = 226.231 (asphärisch)

d 1 = 2.60    nd1 = 1.7847    $\nu$1 = 25.76

r 2 = 43.600

d 2 = 1.20    nd2 = 1.8032    $\nu$2 = 46.38

r 3 = 3.490

d 3 = 5.48

r 4 = $\infty$

d 4 = 3.13

r 5 = 8.766

d 5 = 5.63    nd3 = 1.8042    $\nu$3 = 46.50

r 6 = -4.097

d 6 = 1.15    nd4 = 1.9176    $\nu$4 = 21.51

r 7 = 27.650

d 7 = 0.08
(asphärisch)

r 8 = 11.004

d 8 = 3.29    nd5 = 1.7433    $\nu$5 = 49.20

r 9 = -8.212

d 9 = 0.03

r 10 = 10.765

d 10 = 3.32    nd6 = 1.7292    $\nu$6 = 54.70

r 11 = -25.66

f = 1.846mm                    2$\omega$ = 148 Grad

Asphärenkoeffizienten der ersten Linsenfläche
K    (Konuskonstante) = 0
D    $0.310441 \times 10^{-3}$
E    $-0.179084 \times 10^{-5}$
F    $0.710398 \times 10^{-8}$
Asphärenkoeffizienten der achten Linsenfläche
K    (Konuskonstante) = 0
D    $-0.168858 \times 10^{-2}$
E    $0.244339 \times 10^{-4}$
F    $-0.639913 \times 10^{-6}$
Schnittkurvendefinition der asphärischen Flächen:

**Zu den Tabellen I und II:**

Die asphärischen Flächen sind definiert durch die Gleichung:

$$z = \frac{Cy^2}{1 + (1 - (1\,k + k)\,C^2 y^2)^{1/2}} + Dy^4 + Ey^6 + Fy^8 + Gy^{10}$$

z = Pfeilhöhe in Bezug auf die achssenkrechte Ebene
y = Abstand von der optischen Achse
k = Konuskonstante
D, E, F, G = Asphärenkoeffizienten
C = Scheitelkrümmung

**Zur Tabelle III:**

Die asphärischen Flächen sind definiert durch die Gleichung:

$$z = \frac{Cy^2}{1 + (1 - (1 + k)\,C^2 y^2)^{1/2}} + Dy^4 + Ey^6 + Fy^8$$

7

z = Pfeilhöhe in Bezug auf die achssenkrechte Ebene
y = Abstand von der optischen Achse
k = Konuskonstante
D, E, F = Asphärenkoeffizienten
C = Scheitelkrümmung

**Patentansprüche**

1.  Hochgeöffnetes Weitwinkelobjektiv, bestehend aus nicht mehr als sechs Linsen (1, 2, 3, 4; 12a, 12b, 17a, 17b, 20, 21), die gruppiert sind in:

    einer ersten zerstreuenden Linsengruppe (1; 12) zur Korrektion der Verzeichnung mit einer asphärischen Fläche (8; 13), die die negativ brechende Wirkung der ersten zerstreuenden Linsengruppe (1; 12) ausgehend von der optischen Achse zum Rand hin kontinuierlich vermindert;

    einer darauf folgenden zweiten sammelnden Linsengruppe (6; 15), die in einem Luftabstand (7; 14) zur ersten Linsengruppe (1; 12) angeordnet ist und durch eine Aperturblende (11; 16) mit für die Korrektion wesentlicher Vignettierungswirkung im Bildfeld von der ersten Linsengruppe (1; 12) getrennt ist, wobei die zweite Linsengruppe (6; 15) aus einem Kittglied (5; 17) mit insgesamt positiver Brechkraft, welches korrigierend auf Farbfehler und Petzvalsumme wirkt, und aus einer sammelnden Linsenuntergruppe (4; 18) besteht, welche auf die sphärische Aberration und die Bildfeldwölbung wirkt, und wobei die zweite Linsengruppe mindestens eine asphärische Fläche (9, 10; 19) aufweist, die so geformt ist, daß die positiv brechende Wirkung der zweiten Linsengruppe ausgehend von der optischen Achse zum Rand hin kontinuierlich vermindert ist, **dadurch gekennzeichnet,** daß die Aperturblende sich etwa mittig im Luftabstand (7; 14) zwischen erster (1; 12) und zweiter Linsengruppe (6; 15) befindet und daß das Kittglied (5; 17) der zweiten Linsengruppe (6; 15) der Aperturblende nachgestellt ist, so daß der Bildfeldwinkel bei einer Blendenzahl von 2.0 mindestens 122° beträgt.

2.  Hochgeöffnetes Weitwinkelobjektiv nach Anspruch 1, dadurch gekennzeichnet, daß der Abstand zwischen der ersten zerstreuenden Linsengruppe (1; 12) und der auf die Aperturblende (11; 16) folgenden sammelnden Linsengruppe (6; 15) mindestens das Dreifache der Gesamtbrennweite beträgt.

3.  Hochgeöffnetes Weitwinkelobjektiv nach Anspruch 1, dadurch gekennzeichnet, daß der Luftabstand (7) zwischen der ersten zerstreuenden Linsengruppe (1) und der zweiten positiven Linsengruppe (6) etwa dem 0.3-fachen bis 0.7-fachen der Gesamtbaulänge des Weitwinkelobjektivs entspricht, und daß die sammelnde Linsenuntergruppe (4) mit Wirkung auf die sphärische Aberration und die Bildfeldwölbung eine Positivlinse ist.

4.  Hochgeöffnetes Weitwinkelobjektiv nach Anspruch 3, dadurch gekennzeichnet, daß das Kittglied (5) aus einer objektseitigen Positivlinse (2) und einer bildseitigen Negativlinse (3) besteht.

5.  Hochgeöffnetes Weitwinkelobjektiv nach 3, dadurch gekennzeichnet, daß die Positivlinse der Linsenuntergruppe (4) eine weitere asphärische Fläche (10 in Fig. 5) aufweist, so daß das hochgeöffnete Weitwinkelobjektiv einen typischen Bildfeldwinkel von etwa 130° aufweist und die relative Beleuchtungsstärke mindestens so groß ist wie bei einem Objektiv mit natürlichem Helligkeitsabfall nach cos**4.

6.  Hochgeöffnetes Weitwinkelobjektiv nach einem der Ansprüche 3 bis 5, dadurch gekennzeichnet, daß für das Brennweitenverhältnis f6/f1 der zweiten Linsengruppe (6) und der ersten Linsengruppe (1) folgende Bedingung gilt:

    $$0.9 < |f6/f1| < 1.3$$

7.  Hochgeöffnetes Weitwinkelobjektiv nach einem der Ansprüche 3 bis 6, dadurch gekennzeichnet, daß für das Brennweitenverhältnis f4/f5 der Linsenuntergruppe (4) und der zweiten Linsengruppe (5) folgende Bedingung gilt:

    $$2.0 > |f4/f5|$$

8.  Hochgeöffnetes Weitwinkelobjektiv nach einem der Ansprüche 3 bis 7, gekennzeichnet durch folgende Daten ± 5 %:

```
r 1 = 1470.82 (asphärisch)
                 d 1 = 1.21      nd1 = 1.7292    ν1 = 54.70
r 2 = 5.902
                 d 2 = 9.00
r 3 = ∞
                 d 3 = 6.56
r 4 = 10.15
                 d 4 = 7.00      nd2 = 1.6405    ν2 = 60.10
r 5 = -6.32
                 d 5 = 0.86      nd3 = 1.8467    ν3 = 23.83
r 6 = -111.958
                 d 6 = 0.10
r 7 = 14.870 (asphärisch)
                 d 7 = 5.79      nd4 = 1.7725    ν4 = 49.60
r 8 = -8.640
```

$$f = 2.997mm \qquad 2\omega = 122 \text{ Grad}$$

Asphärenkoeffizienten der ersten Oberfläche

K       (Konuskonstante) = 0
D       $0.340428 \times 10^{-3}$
E       $-0.432607 \times 10^{-5}$
F       $0.576946 \times 10^{-7}$
G       $-0.356679 \times 10^{-9}$

Asphärenkoeffizienten der siebten Oberfläche

K       (Konuskonstante) = 0
D       $-0.852530 \times 10^{-3}$
E       $-0.947159 \times 10^{-5}$
F       $0.151413 \times 10^{-6}$
G       $-0.139941 \times 10^{-8}$

worin bezeichnen:

r1, r2, ...         die Krümmungsradien der Linsen,
d1, d2, ...         die Dicken der Linsen bzw. Luftabstände zwischen den Linsen,
n1, n2, ...         die Brechzahlen der Linsen
ν1, ν2, ...         die Abbezahlen der Linsen, und
die asphärischen Flächen definiert sind durch die Gleichung:

$$z = \frac{Cy^2}{1 + (1 - (1k + k)C^2 y^2)^{1/2}} + Dy^4 + Ey^6 + Fy^8 + Gy^{10}$$

z = Pfeilhöhe in bezug auf die achssenkrechte Ebene
y = Abstand von der optischen Achse
k = Konuskonstante
D, E, F,G = Asphärenkoeffizienten
C = Scheitelkrümmung

9. Hochgeöffnetes Weitwinkelobjektiv nach einem der Ansprüche 3 bis 7, gekennzeichnet durch folgende Daten ± 5 % :

```
r 1 = 381.611 (asphärisch)
                d 1 = 1.17      nd1 = 1.7292    ν1 = 54.70
r 2 = 5.088
                d 2 = 8.64
r 3 =   ∞
                d 3 = 6.19
r 4 = 12.53
                d 4 = 7.30      nd2 = 1.7725    ν2 = 49.60
r 5 = -5.64
                d 5 = 0.86      nd3 = 1.8467    ν3 = 23.83
r 6 = 279.392
                d 6 = 0.40
r 7 = 13.954 (asphärisch)
                d 7 = 5.27      nd4 = 1.7292    ν4 = 54.70

r 8 = -8.480 (asphärisch)


f = 2.762mm                    2 ω = 132 Grad
```

Asphärenkoeffizienten der ersten Oberfläche
K       (Konuskonstante) = 0
D       $0.315830 \times 10^{-3}$
E       $-0.192608 \times 10^{-5}$
F       $0.849578 \times 10^{-8}$
Asphärenkoeffizienten der siebten Oberfläche
K       (Konuskonstante) = 0
D       $-0.767120 \times 10^{-3}$
E       $0.458289 \times 10^{-5}$
F       $-0.359959 \times 10^{-6}$
G       $0.204217 \times 10^{-8}$
Asphärenkoeffizienten der achten Oberfläche
K       (Konuskonstante) = 0
D       $0.193377 \times 10^{-3}$
E       $-0.100577 \times 10^{-5}$
F       $-0.520482 \times 10^{-7}$

worin bezeichnen:

r1, r2, ...        die Krümmungsradien der Linsen,

d1, d2, ...        die Dicken der Linsen bzw. Luftabstände zwischen den Linsen,

n1, n2, ...        die Brechzahlen der Linsen

ν1, ν2, ...        die Abbezahlen der Linsen, und

die asphärischen Flächen definiert sind durch die Gleichung:

$$z = \frac{Cy^2}{1 + (1 - (1k + k)\, C^2 y^2)^{1/2}} + Dy^4 + Ey^6 + Fy^8 + Gy^{10}$$

z = Pfeilhöhe in bezug auf die achssenkrechte Ebene

y = Abstand von der optischen Achse

k = Konuskonstante

D, E, F,G = Asphärenkoeffizienten

C = Scheitelkrümmung

10. Hochgeöffnetes Weitwinkelobjektiv nach Anspruch 1 oder 2, dadurch gekennzeichnet, daß der Luftabstand (14) zwischen der ersten zerstreuenden Linsengruppe (12) und der sammelnden Linsengruppe (15) etwa dem 0.25-fachen bis 0.45-fachen der Gesamtbaulänge des Weitwinkelobjektivs entspricht, und daß die sammelnde Linsenuntergruppe (18) mit Wirkung auf die sphärische Aberration und die Bildfeldwölbung aus zwei sammelnden Linsen (20, 21) besteht.

11. Hochgeöffnetes Weitwinkelobjektiv nach Anspruch 10, dadurch gekennzeichnet, daß das Kittglied (17) aus einer objektseitigen Positivlinse (17a) und einer bildseitigen Negativlinse (17b) besteht, so daß das hochgeöffnete Weitwinkelobjektiv einen typischen Bildfeldwinkel von 146° aufweist und die relative Beleuchtungsstärke mindestens so groß ist wie bei einem Objektiv mit natürlichem Helligkeitsabfall nach cos**4.

12. Hochgeöffnetes Weitwinkelobjektiv nach Anspruch 10 oder 11, dadurch gekennzeichnet, daß für das Brennweitenverhältnis f15/f12 der zweiten Linsengruppe (15) und der ersten Linsengruppe (12) folgende Bedingung gilt:

$$1.0 < |f15/f12| < 1.5$$

13. Hochgeöffnetes Weitwinkelobjektiv nach einem der Ansprüche 10 bis 12, gekennzeichnet durch folgende Daten ± 5 %:

$r\ 1 = 226.231$ (asphärisch)

$d\ 1 = 2.60 \qquad nd1 = 1.7847 \qquad \nu1 = 25.76$

$r\ 2 = 43.600$

$d\ 2 = 1.20 \qquad nd2 = 1.8032 \qquad \nu2 = 46.38$

$r\ 3 = 3.490$

$d\ 3 = 5.48$

$r\ 4 = \infty$

$d\ 4 = 3.13$

$r\ 5 = 8.766$

$d\ 5 = 5.63 \qquad nd3 = 1.8042 \qquad \nu3 = 46.50$

$r\ 6 = -4.097$

$d\ 6 = 1.15 \qquad nd4 = 1.9176 \qquad \nu4 = 21.51$

$r\ 7 = 27.650$

$d\ 7 = 0.08$ (asphärisch)

$r\ 8 = 11.004$

$d\ 8 = 3.29 \qquad nd5 = 1.7433 \qquad \nu5 = 49.20$

$r\ 9 = -8.212$

$d\ 9 = 0.03$

$r\ 10 = 10.765$

$d\ 10 = 3.32 \qquad nd6 = 1.7292 \qquad \nu6 = 54.70$

$r\ 11 = -25.66$

$f = 1.846mm \qquad\qquad 2\omega = 148\ Grad$

Asphärenkoeffizienten der ersten Oberfläche
K     (Konuskonstante) = 0
D     $0.310441 \times 10^{-3}$
E     $-0.179084 \times 10^{-5}$
F     $0.710398 \times 10^{-8}$
Asphärenkoeffizienten der achten Oberfläche
K     (Konuskonstante) = 0
D     $-0.168858 \times 10^{-2}$
E     $0.244339 \times 10^{-4}$
F     $-0.639913 \times 10^{-6}$
worin bezeichnen:
r1, r2, ...          die Krümmungsradien der Linsen,
d1, d2, ...          die Dicken der Linsen bzw. Luftabstände zwischen den Linsen,
n1, n2, ...          die Brechzahlen der Linsen
ν1, ν2, ...          die Abbezahlen der Linsen, und
die asphärischen Flächen definiert sind durch die Gleichung:

$$z = \frac{Cy^2}{1 + (1 - (1 + k)\,C^2 y^2)^{1/2}} + Dy^4 + Ey^6 + Fy^8$$

z = Pfeilhöhe in bezug auf die achssenkrechte Ebene
y = Abstand von der optischen Achse
k = Konuskonstante

D, E, F = Asphärenkoeffizienten

C = Scheitelkrümmung

14. Hochgeöffnetes Weitwinkelobjektiv nach einem der Ansprüche 1 bis 13, dadurch gekennzeichnet, daß der Bildfeldwinkel etwa 125° bis etwa 150° beträgt.

**Claims**

1. A high-aperture, wide angle lens consisting of not more than six lenses (1, 2, 3, 4; 12a, 12b, 17a, 17b, 20, 21) which are grouped into:

    a first divergent lens group (1; 12) for the correction of distortion, with an aspherical surface (8; 13) which continuously reduces the negative refractive effect of the first divergent lens group (1; 12) from the optical axis to the edge;

    followed by a second convergent lens group (6; 15) which is disposed with an air gap (7; 14) in relation to the first lens group (1; 12) and is separated from the first lens group (1; 12) by an aperture diaphragm (11; 16) with a vignetting effect in the image field which is essential for the correction, wherein the second lens group (6; 15) consists of a cemented component (5; 17) with overall positive refractive power which has a correcting effect on colour aberrations and Petzval sum and which consists of a convergent lens subgroup (4; 18) which acts on spherical aberration and image field curvature, and wherein the second lens group has at least one aspherical surface (9, 10; 19) which is shaped so that the positive refractive effect of the second lens group is continuously reduced from the optical axis to the edge, characterised in that the aperture diaphragm is situated approximately centrally in the air gap (7; 14) between the first (1; 12) and the second lens group (6; 15) and that the cemented component (5; 17) of the second lens group (6; 15) is placed after the aperture diaphragm so that the image field angle is at least 122° at an f-number of 2.0.

2. A high-aperture, wide angle lens according to claim 1, characterised in that the distance between the first divergent lens group (1; 12) and the convergent lens group (6; 15) following the aperture diaphragm (11; 16) is at least three times the overall focal length.

3. A high-aperture, wide angle lens according to claim 1, characterised in that the air gap (7) between the first divergent lens group (1) and the second positive lens group (6) is approximately 0.3 to 0.7 times the overall length of the wide angle lens, and that the convergent lens subgroup (4) is a positive lens with an effect on spherical aberration and image field curvature.

4. A high-aperture, wide angle lens according to claim 3, characterised in that the cemented component (5) consists of a positive lens (2) on the object side and a negative lens (3) on the image side.

5. A high-aperture, wide angle lens according to claim 3, characterised in that the positive lens of the lens subgroup (4) has a further aspherical surface (10 in Figure 5), so that the high-aperture, wide angle lens has a typical image field angle of about 130° and the relative intensity of illumination is at least as high as that for a lens having a natural fall-off in brightness according to cos**4.

6. A high-aperture, wide angle lens according to any one of claims 3 to 5, characterised in that the following condition applies to the ratio of the focal lengths f6/f1 of the second lens group (6) and the first lens group (1):

$$0.9 < |f6/f1| < 1.3.$$

7. A high-aperture, wide angle lens according to any one of claims 3 to 6, characterised in that the following condition applies to the ratio of the focal lengths f4/f5 of the lens subgroup (4) and the second lens group (5):

$$2.0 > |f4/f5|.$$

8. A high-aperture, wide angle lens according to any one of claims 3 to 7, characterised by the following data ± 5 %:

r 1 = 1470.82     (aspherical)

d 1 = 1.21     nd1 = 1.7292     $\nu1$ = 54.70

r 2 = 5.902

d 2 = 9.00

r 3 = ∞

d 3 = 6.56

r 4 = 10.15

d 4 = 7.00     nd2 = 1.6405     $\nu2$ = 60.10

r 5 = -6.32

d 5 = 0.86     nd3 = 1.8467     $\nu3$ = 23.83

r 6 = -111.958

d 6 = 0.10

r 7 = 14.870     (aspherical)

d 7 = 5.79     nd4 = 1.7725     $\nu4$ = 49.60

r 8 = -8.640

f = 2.997 mm         $2\omega$ = 122 degrees

Asphericity coefficients of the first surface:

K     (conicity constant) = 0
D     $0.340428 \times 10^{-3}$
E     $-0.432607 \times 10^{-5}$
F     $0.576946 \times 10^{-7}$
G     $-0.356679 \times 10^{-9}$

Asphericity coefficients of the seventh surface:

K     (conicity constant) = 0
D     $-0.852530 \times 10^{-3}$
E     $-0.947159 \times 10^{-5}$
F     $0.151413 \times 10^{-6}$
G     $-0.139941 \times 10^{-8}$

where:

r1, r2, ...     denote the radii of curvature of the lenses,
d1, d2, ...     denote the thickness of the lenses or of the air gaps between the lenses,
n1, n2, ...     denote the refractive index of the lenses, and
$\nu$1, $\nu$2, ...     denote the Abbe numbers of the lenses, and the aspherical surfaces are defined by the equation:

$$z = \frac{Cy^2}{1 + (1 - (1k + k)\, C^2 y^2)^{1/2}} + Dy^4 + Ey^6 + Fy^8 + Gy^{10}$$

where

z = the pitch in relation to the plane perpendicular to the axis
y = the distance from the optical axis
k = the conicity constant
D, E, F, G = asphericity coefficients, and
C = the peak curvature.

9.     A high-aperture, wide angle lens according to any one of claims 3 to 7, characterised by the following data ± 5 %:

$$r\,1 = 381.611 \quad \text{(aspherical)}$$

$$d\,1 = 1.17 \qquad nd1 = 1.7292 \qquad \nu1 = 54.70$$

$$r\,2 = 5.088$$

$$d\,2 = 8.64$$

$$r\,3 = \infty$$

$$d\,3 = 6.19$$

$$r\,4 = 12.53$$

$$d\,4 = 7.30 \qquad nd2 = 1.7725 \qquad \nu2 = 49.60$$

$$r\,5 = -5.64$$

$$d\,5 = 0.86 \qquad nd3 = 1.8467 \qquad \nu3 = 23.83$$

$$r\,6 = 279.392$$

$$d\,6 = 0.40$$
$$\text{(aspherical)}$$

$$r\,7 = 13.954$$

$$d\,7 = 5.27 \qquad nd4 = 1.7292 \qquad \nu4 = 54.70$$

$$r\,8 = -8.480 \quad \text{(aspherical)}$$

$$f = 2.762 \text{ mm} \qquad\qquad 2\omega = 132 \text{ degrees}$$

Asphericity coefficients of the first surface:

K    (conicity constant) = 0

D    $0.315830 \times 10^{-3}$

E    $-0.192608 \times 10^{-5}$

F    $0.849578 \times 10^{-8}$

Asphericity coefficients of the seventh surface:

K    (conicity constant) = 0

D    $-0.767120 \times 10^{-3}$

E    $0.458289 \times 10^{-5}$

F    $-0.359959 \times 10^{-6}$

G    $-0.204217 \times 10^{-8}$

Asphericity constants of the eighth surface:

K    (conicity constant) = 0

D    $0.193377 \times 10^{-3}$

E    $-0.100577 \times 10^{-5}$

F    $-0.520482 \times 10^{-7}$

where

r1, r2, ...    denote the radii of curvature of the lenses,

d1, d2, ...    denote the thickness of the lenses or of the air gaps between the lenses,

n1, n2, ...    denote the refractive index of the lenses, and

v1, v2, ...    denote the Abbe numbers of the lenses, and the aspherical surfaces are defined by the equation:

$$z = \frac{Cy^2}{1 + (1 - (1k + k)\,C^2\,y^2)^{1/2}} + Dy^4 + Ey^6 + Fy^8 + Gy^{10}$$

where

z = the pitch in relation to the plane perpendicular to the axis

y = the distance from the optical axis

k = the conicity constant

D, E, F, G = asphericity coefficients, and

C = the peak curvature.

10. A high-aperture, wide angle lens according to claim 1 or 2, characterised in that the air gap (14) between the first divergent lens group (12) and the convergent lens group (15) is approximately 0.25 to 0.45 times the overall length of the wide angle lens, and that the convergent lens subgroup (18) consists of two convergent lenses (20, 21) with an effect on spherical aberration and image field curvature.

11. A high-aperture, wide angle lens according to claim 10, characterised in that the cemented component (17) consists of a positive lens (17a) on the object side and a negative lens (17b) on the image side, so that the high-aperture, wide angle lens has a typical image field angle of 146° and the relative intensity of illumination is at least as high as that for a lens having a natural fall-off in brightness according to cos**4.

12. A high-aperture, wide angle lens according to claim 10 or 11, characterised in that the following condition applies to the ratio of the focal lengths f15/f12 of the second lens group (15) and the first lens group (12):

$$1.0 < |f15/f12| < 1.5.$$

13. A high-aperture, wide angle lens according to any one of claims 10 to 12, characterised by the following data ± 5 %:

| | | | |
|---|---|---|---|
| r 1 = 226.231 | (aspherical) | | |
| | d 1 = 2.60 | nd1 = 1.7847 | $\nu$1 = 25.76 |
| r 2 = 43.600 | | | |
| | d 2 = 1.20 | nd2 = 1.8032 | $\nu$2 = 46.38 |
| r 3 = 3.490 | | | |
| | d 3 = 5.48 | | |
| r 4 = ∞ | | | |
| | d 4 = 3.13 | | |
| r 5 = 8.766 | | | |
| | d 5 = 5.63 | nd3 = 1.8042 | $\nu$3 = 46.50 |
| r 6 = -4.097 | | | |
| | d 6 = 1.15 | nd4 = 1.9176 | $\nu$4 = 21.51 |
| r 7 = 27.650 | | | |
| | d 7 = 0.08 (aspherical) | | |
| r 8 = 11.004 | | | |
| | d 8 = 3.29 | nd5 = 1.7433 | $\nu$5 = 49.20 |
| r 9 = -8.212 | | | |
| | d 9 = 0.03 | | |
| r 10 = 10.765 | | | |
| | d 10 = 3.32 | nd6 = 1.7292 | $\nu$6 = 54.70 |
| r 11 = -25.66 | | | |

f = 1.846 mm        $2\omega$ = 148 degrees

Asphericity coefficients of the first surface:
K    (conicity constant) = 0
D    $0.310441 \times 10^{-3}$
E    $-0.179084 \times 10^{-5}$
F    $0.710398 \times 10^{-8}$
Asphericity coefficients of the eighth surface:
K    (conicity constant) = 0
D    $-0.168858 \times 10^{-2}$
E    $0.244339 \times 10^{-4}$
F    $-0.639913 \times 10^{-6}$
where:
r1, r2, ...        denote the radii of curvature of the lenses,
d1, d2, ...        denote the thickness of the lenses or of the air gaps between the lenses,
n1, n2, ...        denote the refractive index of the lenses, and
v1, v2, ...        denote the Abbe numbers of the lenses, and the aspherical surfaces are defined by the equation:

$$z = \frac{Cy^2}{1 + (1 - (1 + k) C^2 y^2)^{1/2}} + Dy^4 + Ey^6 + Fy^8$$

where

z = the pitch in relation to the plane perpendicular to the axis

y = the distance from the optical axis

k = the conicity constant

D, E, F = asphericity coefficients, and

C = the peak curvature.

14. A high-aperture, wide angle lens according to any one of claims 1 to 13, characterised in that the image field angle is about 125° to about 150°.

**Revendications**

1. Objectif grand-angle à grande ouverture, formé d'un maximum de six lentilles (1, 2, 3, 4 ; 12a, 12b, 17a, 17b, 20, 21) qui sont groupées en :

   un premier groupe de lentilles divergentes (1 ; 12) pour la correction de la distorsion, présentant une surface asphérique (8 ; 13) qui réduit de façon continue l'action réfringente négative dudit premier groupe de lentilles divergentes (1 ; 12) de l'axe optique vers le bord ;

   un second groupe de lentilles convergentes (6 ; 15) succédant au premier, qui est disposé suivant un intervalle d'air (7 ; 14) du premier groupe de lentilles (1 ; 12) et qui est séparé de celui-ci par un diaphragme d'ouverture (11 ; 16) présentant une action de vignettage sensible pour la correction, dans le champ d'image, étant précisé que le second groupe de lentilles (6 ; 15) se compose d'un élément (5 ; 17) à pouvoir réfringent globalement positif, qui a une action de correction sur les aberrations chromatiques et la somme de Petzval, et d'un sous-groupe de lentilles convergentes (4 ; 18) qui agit sur l'aberration sphérique et sur la courbure de champ, et étant précisé que le second groupe de lentilles comporte au moins une surface asphérique (9, 10 ; 19) qui est formée de telle sorte que l'action réfringente positive du second groupe de lentilles soit réduite de façon continue de l'axe optique vers le bord, caractérisé en ce que le diaphragme d'ouverture se trouve approximativement au milieu de l'intervalle (7 ; 14) entre les premier (1 ; 12) et second groupe de lentilles (6; 15), et en ce que l'élément (5 ; 17) du second groupe de lentilles (6 ; 15) est placé en aval du diaphragme d'ouverture, de sorte que l'angle de champ d'image, pour une valeur de diaphragme de 2.0, est d'au moins 122°.

2. Objectif grand-angle à grande ouverture selon la revendication 1, caractérisé en ce que l'écartement entre le premier groupe de lentilles divergentes (1 ; 12) et le groupe de lentilles convergentes (6 ; 15) succédant au diaphragme d'ouverture (11 ; 16) est au moins égal au triple de la distance focale totale.

3. Objectif grand-angle à grande ouverture selon la revendication 1, caractérisé en ce que l'intervalle (7) entre le premier groupe de lentilles divergentes (1) et le second groupe de lentilles convexes (6) correspond environ à 0,3 à 0,7 fois la longueur totale de l'objectif grand-angle, et en ce que le sous-groupe de lentilles convergentes (4) est une lentille convexe avec une action sur l'aberration sphérique et la courbure de champ.

4. Objectif grand-angle à grande ouverture selon la revendication 3, caractérisé en ce que l'élément (5) se compose d'une lentille convexe (2) située côté objet et d'une lentille concave (3) située côté image.

5. Objectif grand-angle à grande ouverture selon la revendication 3, caractérisé en ce que la lentille convexe du sous-groupe de lentilles (4) comporte une autre surface asphérique (10 sur la figure 5), de sorte que l'objectif grand-angle à grande ouverture présente un angle de champ d'image typique d'environ 130° et l'éclairement relatif est au moins aussi grand qu'avec un objectif à baisse de luminosité naturelle suivant cos**4.

6. Objectif grand-angle à grande ouverture selon l'une des revendications 3 à 5, caractérisé en ce que la condition suivante s'applique au rapport de distance focale f6/f1 du second groupe de lentilles (6) et du premier groupe de lentilles (1) :

$$0.9 < |f6/f1| < 1.3$$

7. Objectif grand-angle à grande ouverture selon l'une des revendications 3 à 6, caractérisé en ce que la condition suivante s'applique au rapport de distance focale f4/f5 du sous-groupe de lentilles (4) et du second groupe de lentilles (5) :

$$2.0 > |f4/f5|$$

8.  Objectif grand-angle à grande ouverture selon l'une des revendications 3 à 7, caractérisé par les données suivantes ± 5 % :

r 1 = 1470.82 (asphérique)

d 1 = 1.21    nd1 = 1.7292    $\nu$1 = 54.70

r 2 = 5.902

d 2 = 9.00

r 3 = $\infty$

d 3 = 6.56

r 4 = 10.15

d 4 = 7.00    nd2 = 1.6405    $\nu$2 = 60.10

r 5 = -6.32

d 5 = 0.86    nd3 = 1.8467    $\nu$3 = 23.83

r 6 = -111.958

d 6 = 0.10

r 7 = 14.870 (asphérique)

d 7 = 5.79    nd4 = 1.7725    $\nu$4 = 49.60

r 8 = -8.640

f = 2.997 mm    $2\omega$ = 122 degrés

Coefficients asphériques de la première surface

K   (constante conique) = 0

D   $0.340428 \times 10^{-3}$

E   $-0.432607 \times 10^{-5}$

F   $0.576946 \times 10^{-7}$

G   $-0.356679 \times 10^{-9}$

Coefficients asphériques de la septième surface

K   (constante conique) = 0

D   $-0.852530 \times 10^{-3}$

E   $-0.947159 \times 10^{-5}$

F   $0.151413 \times 10^{-6}$

G   $-0.139941 \times 10^{-3}$

r1, r2, ...       désignant le rayon de courbure des lentilles,

d1, d2, ...       l'épaisseur des lentilles ou l'intervalle entre les lentilles

n1, n2, ...       l'indice de réfraction des lentilles,

$\nu$1, $\nu$2, ...       le coefficient d'Abbe des lentilles, et

les surfaces asphériques étant définies par l'équation :

$$z = \frac{Cy^2}{1 + (1 - (1k + k) C^2 y^2)^{1/2}} + Dy^4 + Ey^6 + Fy^8 + Gy^{10}$$

dans laquelle :

z =       flèche d'arc par rapport au plan perpendiculaire à l'axe

y =       écartement par rapport à l'axe optique

k =       constante conique

D, E, F, G =       coefficients asphériques

C =       courbure de sommet

9.  Objectif grand-angle à grande ouverture selon l'une des revendications 3 à 7, caractérisé par les données suivantes + 5 % :

r 1 = 381.611 (asphérique)

d 1 = 1.17        nd1 = 1.7292        $\nu1$ = 54.70

r 2 = 5.088

d 2 = 8.64

r 3 = $\infty$

d 3 = 6.19

r 4 = 12.53

d 4 = 7.30        nd2 = 1.7725        $\nu2$ = 49.60

r 5 = -5.64

d 5 = 0.86        nd3 = 1.8467        $\nu3$ = 23.83

r 6 = 279.392

d 6 = 0.40


r 7 = 13.954 (asphérique)

d 7 = 5.27        nd4 = 1.7292        $\nu4$ = 54.70

r 8 = -8.480 (asphérique)

f = 2.762 mm        $2\omega$ = 132 degrés


Coefficients asphériques de la première surface
K    (constante conique) = 0
D    $0.315830 \times 10^{-3}$
E    $-0.192608 \times 10^{-5}$
F    $0.849578 \times 10^{-8}$
Coefficients asphériques de la septième surface
K    (constante conique) = 0
D    $-0.767120 \times 10^{-3}$
E    $0.458289 \times 10^{-5}$
F    $-0.359959 \times 10^{-6}$
G    $0.204217 \times 10^{-8}$
Coefficients asphériques de la huitième surface
K    (constante conique) = 0
D    $0.193377 \times 10^{-3}$
E    $-0.100577 \times 10^{-5}$
F    $-0.520482 \times 10^{-7}$
r1, r2, ...        désignant le rayon de courbure des lentilles,
d1, d2, ...        l'épaisseur des lentilles ou l'intervalle entre les lentilles,
n1, n2, ...        l'indice de réfraction des lentilles,
$\nu$1, $\nu$2, ...        le coefficient d'Abbe des lentilles, et
les surfaces asphériques étant définies par l'équation :

$$z = \frac{Cy^2}{1 + (1 - (1k + k) C^2 y^2)^{1/2}} + Dy^4 + Ey^6 + Fy^8 + Gy^{10}$$

dans laquelle :
z =        flèche d'arc par rapport au plan perpendiculaire à l'axe
y =        écartement par rapport à l'axe optique
k =        constante conique
D, E, F, G =        coefficients asphériques
C =        courbure de sommet

10. Objectif grand-angle à grande ouverture selon la revendication 1 ou 2, caractérisé en ce que l'intervalle (14) entre le premier groupe de lentilles divergentes (12) et le groupe de lentilles convergentes (15) correspond approximativement à 0,25 à 0,45 fois la longueur totale de l'objectif grand-angle, et en ce que le sous-groupe de lentilles convergentes (18) agissant sur l'aberration sphérique et sur la courbure de champ se compose de deux lentilles convergentes (20, 21).

11. Objectif grand-angle à grande ouverture selon la revendication 10, caractérisé en ce que l'élément (17) se compose d'une lentille convexe (17a) située côté objet et d'une lentille concave (17b) située côté image, de sorte que l'objectif grand-angle à grande ouverture présente un angle de champ d'image typique de 146° et que l'éclairement relatif est au moins aussi grand qu'avec un objectif à baisse de luminosité naturelle suivant cos**4.

12. Objectif grand-angle à grande ouverture selon la revendication 10 ou 11, caractérisé en ce que la condition suivante s'applique au rapport de distance focale f15/f12 du second groupe de lentilles (15) et du premier groupe de lentilles (12) :

$$1.0 < |f15/f12| < 1.5$$

13. Objectif grand-angle à grande ouverture selon l'une des revendications 10 à 12, caractérisé par les données suivantes $\pm$ 5 % :

$r\ 1\ =\ 226.231$ (asphérique)

$\qquad d\ 1\ =\ 2.60 \qquad nd1\ =\ 1.7847 \qquad \nu1\ =\ 25.76$

$r\ 2\ =\ 43.600$

$\qquad d\ 2\ =\ 1.20 \qquad nd2\ =\ 1.8032 \qquad \nu2\ =\ 46.38$

$r\ 3\ =\ 3.490$

$\qquad d\ 3\ =\ 5.48$

$r\ 4\ =\ \infty$

$\qquad d\ 4\ =\ 3.13$

$r\ 5\ =\ 8.766$

$\qquad d\ 5\ =\ 5.63 \qquad nd3\ =\ 1.8042 \qquad \nu3\ =\ 46.50$

$r\ 6\ =\ -4.097$

$\qquad d\ 6\ =\ 1.15 \qquad nd4\ =\ 1.9176 \qquad \nu4\ =\ 21.51$

$r\ 7\ =\ 27.650$

$\qquad d\ 7\ =\ 0.08$

$r\ 8\ =\ 11.004$ (asphérique)

$\qquad d\ 8\ =\ 3.29 \qquad nd5\ =\ 1.7433 \qquad \nu5\ =\ 49.20$

$r\ 9\ =\ -8.212$

$\qquad d\ 9\ =\ 0.03$

$r\ 10\ =\ 10.765$

$\qquad d\ 10\ =\ 3.32 \qquad nd6\ =\ 1.7292 \qquad \nu6\ =\ 54.70$

$r\ 11\ =\ -25.66$

$$f\ =\ 1.846\ mm \qquad 2\omega\ =\ 148\ \text{degrés}$$

Coefficients asphériques de la première surface
K    (constante conique) = 0
D    $0.310441 \times 10^{-3}$
E    $-0.179084 \times 10^{-5}$
F    $0.710398 \times 10^{-8}$
Coefficients asphériques de la huitième surface
K    (constante conique) = 0
D    $-0.168858 \times 10^{-2}$
E    $0.244339 \times 10^{-4}$
F    $-0.639913 \times 10^{-6}$
r1, r2, ...          désignant le rayon de courbure des lentilles,
d1, d2, ...          l'épaisseur des lentilles ou l'intervalle entre les lentilles,
n1, n2, ...          l'indice de réfraction des lentilles,
$\nu1, \nu2, ...$          le coefficient d'Abbe des lentilles, et
les surfaces asphériques étant définies par l'équation :

$$z = \frac{Cy^2}{1 + (1 - (1 + k)\, C^2\, y^2)^{1/2}} + Dy^4 + Ey^6 + Fy^8$$

dans laquelle :

| | |
|---|---|
| z = | flèche d'arc par rapport au plan perpendiculaire à l'axe |
| y = | écartement par rapport à l'axe optique |
| k = | constante conique |
| D, E, F = | coefficients asphériques |
| C = | courbure de sommet |

14. Objectif grand-angle à grande ouverture selon l'une des revendications 1 à 13, caractérisé en ce que l'angle de champ d'image est d'environ 125° à environ 150°.

Fig 1

Fig. 2

VERZEICHNUNGSGITTER

Fig. 3

rel. Beleuchtungsstaerke (%) bei k = 2.0

1/2 Bildwinkel

Fig. 4

sag
mer

Bildfeldwölbung (mm)

Fig 5

Fig. 6

VERZEICHNUNGSGITTER

Fig. 7

rel. Beleuchtungsstaerke (%) bei k = 2.0

1/2 Bildwinkel

Fig. 8

66°

33°

—— sag

– – mer

Bildfeldwölbung (mm)

Fig. 9

Fig. 10

VERZEICHNUNGSGITTER

Fig. 12

Fig. 11

rel. Beleuchtungsstärke (%) bei K = 2.0

1/2 Bildwinkel

Bildfeldwölbung (mm)